# EUROPEAN PATENT APPLICATION

(11) **EP 1 376 188 A1**
(43) Date of publication of application: **02.01.2004**
(21) Application number: 02705173.9
(22) Date of filing: 14.03.2002
(51) Int. Cl.: G02B 25/00

(54) **OPTICAL SYSTEM**

(30) Priority: 29.03.2001 JP 2001096402
(71) Applicant: Nittoh Kogaku K.K., Suwa-shi, Nagano 392-0131 (JP); Tsuchiya, Toshinori, Miyazaki-shi, Miyazaki 880-0021 (JP)
(72) Inventor: TAKAHASHI, Fuminori, c/o NITTOH KOGAKU K.K., Suwa-shi, Nagano 392-0021 (JP)
(74) Representative: Grünecker, Kinkeldey, Stockmair & Schwanhäusser Anwaltssozietät
(86) International application number: PCT/JP2002/002406
(87) International publication number: WO 2002/079850

(57) **Abstract**

An optical system including a lens (30) which is an optical part without a reflecting surface, wherein an incident optical axis (1) and an outgoing optical axis (2) does not agree with each other. An optical axis (4) of the lens (30) is not parallel with nor perpendicular to a plane including an incident position (25) of an incident light, an outgoing position of an outgoing light (55), and the incident optical axis (1) or the outgoing optical axis (2).

## Description

### Technical Field

The present invention relates to an optical system in which an incident optical axis does not agree with an outgoing optical axis.

### Background Art

When an incident optical axis does not agree with an outgoing optical axis in an optical system (for example, when an optical axis of an objective lens system does not agree with an optical axis of an ocular lens system in a magnifying mirror), the incident optical axis and the outgoing optical axis are set to be directed in the same direction horizontal direction or the same vertical direction. In other words, a plane including the incident optical axis and the outgoing optical axis is set to be horizontal or vertical to the optical system.

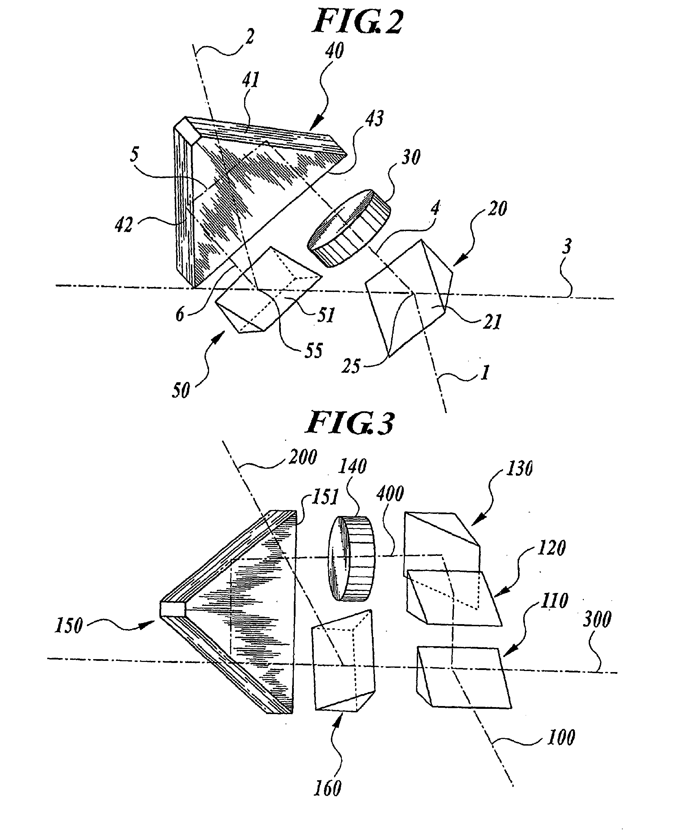

For example, in an optical system in earlier technology shown in FIG. 3, an incident optical axis 100 and an outgoing optical axis 200 are set to be directed in the same horizontal direction by reflecting light several times while using mirrors 110, 120, 130 and 160, a prism 150 and the like. Here, an optical axis 400 of the lens 140 is set to be parallel with the plane including the incident optical axis 100 and the outgoing optical axis 200. The reference numeral 300 shown in FIG. 3 indicates a horizontal line placed on the plane including the incident optical axis 100 and the outgoing optical axis 200.

However, in the optical system in the earlier technology, since a reflection system such as mirrors (the mirrors 110 and 120 in the example shown in FIG. 3) for directing optical axes in the same horizontal direction or the same vertical direction is required, a space of the reflection system is additionally required, and a problem has arisen that a size of an optical device is increased. Further, since the number of parts of the optical system is increased, another problem has also arisen that the weight of the whole optical system becomes heavy and the cost also becomes high.

An object of the present invention is to provide an optical system, in which an incident optical axis does not agree with an outgoing optical axis and the incident optical axis and the outgoing optical axis are set to be directed in the same horizontal direction or the same vertical direction, in compact size and at low cost.

### Disclosure of the Invention

In order to solve the above problems, the optical system of the present invention, in which an incident optical axis does not agree with an outgoing optical axis, comprises: an optical part having an optical axis, the optical axis being not parallel with and not perpendicular to a plane including an incident position of an incident light, an outgoing position of an outgoing light, and the incident optical axis or the outgoing optical axis; and having no reflecting surface.

That is, the optical axis of the optical part having no reflecting surface is set in a direction not parallel with nor perpendicular to the plane including the incident position of the incident light, the outgoing position of the outgoing light and either the incident optical axis or the outgoing optical axis.

Here, the "incident position of the incident light" means a position at which the light entered along the incident axis is reflected or refracted in the optical system. Further, the "outgoing position of the outgoing light" means a position at which a light is reflected or refracted in the optical system so as to go out along the outgoing optical axis.

In the earlier technology, since the optical axis of the optical part having no reflecting surface is set to be parallel with or perpendicular to the plane including the incident optical axis and the outgoing optical axis, a reflection system (for example, the mirrors 110 and 120 shown in FIG. 3) for directing the incident optical axis and the outgoing optical axis in the same horizontal direction or the same vertical direction is required. In contrast, in the present invention, the incident optical axis and the outgoing optical axis are set to be directed in the same horizontal direction or the same vertical direction by setting the optical axis of the optical part having no reflecting surface to a freer direction without restriction.

In the optical system according to the present invention, since no reflection system is required to direct the optical axes in the same horizontal direction or the same vertical direction, the whole optical system can be set more compactly as compared with that in the earlier technology. Further, since the number of parts is further decreased, the weight of the whole optical system can be lightened, and the whole optical system can be manufactured at low cost.

The optical system according to the present invention is arranged in, for example, an optical device such as a magnifying mirror or the like. However, the present invention is not limited to this device, but can be applied to various devices.

Further, in the present invention, the optical axis of the optical part having no reflecting surface may be not parallel with and not perpendicular to both a plane including the incident position, the outgoing position and the incident optical axis, and a plane including the incident position, the outgoing position and the outgoing optical axis.

That is, the optical axis of the optical part having no reflecting surface may be set to a direction not parallel with nor perpendicular to both the plane including the incident position, the outgoing position and the incident optical axis, and the plane including the incident position, the outgoing position and the outgoing optical axis.

Moreover, in this optical system, the incident optical axis and the outgoing optical axis may be placed on the same plane.

That is, the optical axis of the optical part having no reflecting surface may be set to a direction not parallel with nor perpendicular to the plane including the incident position, the outgoing position, the incident optical axis and the outgoing optical axis.

Further, in this optical system, the incident optical axis and the outgoing optical axis may be parallel with each other.

According to this optical system, the optical axis of the optical part having no reflecting surface is set to a freer direction compared with that in the earlier technology, and the incident optical axis and the outgoing optical axis are set to be directed in the same horizontal direction or the same vertical direction. Therefore, no reflection system for directing the optical axes in the same horizontal direction or the same vertical direction is required. Accordingly, the whole optical system can be set more compactly and can be lightened in weight. Further, the whole optical system can be manufactured at low cost.

### Brief Description of Drawings

FIG. 1 is a front view showing an embodiment of an optical system to which the present invention is applied,
FIG. 2 is a schematic perspective view showing the optical system of FIG. 1, and
FIG. 3 is a schematic perspective view explaining a conventional optical system.

### Best Mode for Carrying Out the Invention

Hereinafter, an embodiment according to the present invention will be described in detail with reference to the drawings. An optical system of the embodiment is applied to, for example, a magnifying mirror or the like used by a wearing it as the same manner as glasses and the like when fine work at hand is performed.

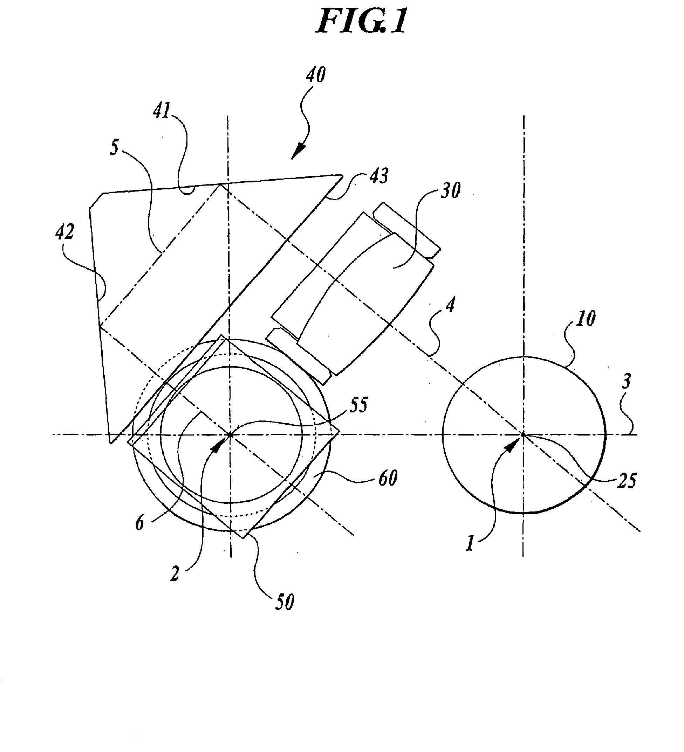

FIG. 1 is a front view and FIG. 2 is a schematic perspective view showing the optical system used in this embodiment.

As shown in FIGS. 1 and 2, the optical system used in this embodiment comprises an objective lens 10, a first mirror 20, a lens (optical part) 30, a prism 40, a second mirror 50 and an ocular lens 60. Here in FIG. 1, the first mirror 20 is not shown. Further, in FIG. 2, each of the objective lens 10 and the ocular lens 60 is not shown.

Further, the reference numeral 3 shown in FIGS. 1 and 2 indicates a horizontal line placed on a horizontal plane including an incident optical axis 1 and an outgoing optical axis 2. Here, the "horizontal plane" is a plane horizontal to the optical system, and the "horizontal line" is a straight line extending in a lateral (right and left) direction when the optical system is seen from the front thereof.

The objective lens 10 and the ocular lens 60 are arranged on condition that optical axes thereof are parallel with each other but do not agree with each other. The optical axis of the objective lens 10 is the incident optical axis 1 of the optical system used in this embodiment; and the optical axis of the ocular lens 60 is the outgoing optical axis 2. The directions of both the incident optical axis 1 and the outgoing optical axis 2 in the front view shown in FIG. 1 are perpendicular to the paper of FIG. 1.

The first mirror 20 is arranged on the incident optical axis 1. A reflecting surface 21 of the first mirror 20 is oriented toward a direction so as to reflect a light entered along the incident optical axis 1 to a direction which is not parallel with nor perpendicular to a plane including both the incident optical axis 1 and the outgoing optical axis 2. Here, an intersection of the incident optical axis 1 and the reflecting surface 21 of the first mirror 20 is an incident position (a position at which a light entered along the incident optical axis 1 is reflected) 25 of the incident light.

Further, the lens 30 is arranged so as to make an optical axis (hereinafter, named a first optical axis) 4 of the lens 30 agree with an optical path of a light reflected by the first mirror 20.

Further, the prism 40 has a side surface in which a first and second reflecting surfaces 41 and 42 are formed. The first reflecting surface 41 is arranged so as to be placed on the first optical axis 4. The light entered the prism 40 through the lens 30 is reflected on the first reflecting surface 41, proceeds along a second optical axis 5, furthermore, is reflected on the second reflecting surface 42, and proceeds toward the second mirror 50 along a third optical axis 6.

Furthermore, a reflecting surface 51 of the second mirror 50 is oriented toward a direction so as to reflect the light reflected by the second reflecting surface 42 of the prism 40 to a direction along the outgoing optical axis 2. Therefore, the light reflected by the second mirror 50 goes out from the ocular lens 60 along the outgoing optical axis 2. Here, an intersection of the outgoing optical axis 2 and the reflecting surface 51 of the second mirror 50 is an outgoing position (a position at which the light is reflected so as to go out along the outgoing optical axis 2) 55 of the outgoing light.

As shown in FIGS. 1 and 2, the first mirror 20, the lens 30, the prism 40 and the second mirror 50 are arranged on condition that each of the first to third optical axes 4 to 6 is not parallel with nor perpendicular to the plane including the incident position 25, the outgoing position 55, the incident optical axis 1 and the outgoing optical axis 2, and that the first and third optical axes 4 and 6 are set to be directed in directions so as to intersect with the incident optical axis 1 and the outgoing optical axis 2, respectively.

As described above, in the optical system of this embodiment, the optical axis (first optical axis) 4 of the lens 40 is set to be directed in a direction not parallel with nor perpendicular to the plane including the incident position 25, the outgoing position 55, the incident optical axis 1 and the outgoing optical axis 2. Thereby, the incident optical axis 1 and the outgoing optical axis 2 are directed in the same horizontal direction. Accordingly, the optical system of this embodiment differs from that in the earlier technology and does not require any reflection system which is used only to direct the incident optical axis 1 and the outgoing optical axis 2 in the same horizontal direction.

Here, "to direct the incident optical axis and the outgoing optical axis in the same horizontal direction" means to make the incident optical axis and the outgoing optical axis align with each other in a lateral (right and left) direction when the optical system is seen from the front thereof .

Accordingly, as compared with in the earlier technology, the size of the whole optical system can be set further compactly. Further, since the number of parts can be decreased, the whole optical system can be lightened in weight, and can be manufactured at low cost.

Further, since the optical axis (first optical axis) 4 of the lens 30 is set to be directed in a direction intersecting with the incident optical axis 1 and the outgoing optical axis 2, as compared with a case where the first optical axis 4 is set to be directed in the same direction as that of the incident optical axis 1 and the outgoing optical axis 2, the depth of the whole optical system can be further shortened.

Moreover, as shown in FIGS. 1 and 2, the prism 40 is arranged on condition that a long side 43 of the prism 40 inclines against the horizontal line 3. Thereby, as shown in FIG. 3, as compared with the case in the earlier technology in which the prism 150 is arranged so as to make the long side 151 of the prism 150 be perpendicular to the horizontal line 300, a degree of the protrusion of the prism 40 in the up-and-down direction and the left direction in FIGS. 1 and 2 can be reduced. Accordingly, the size of the whole optical system can be set further compactly.

Further, since the optical system of this embodiment is applied to a magnifying mirror or the like, the magnifying mirror can be set further compactly and lightened in weight. Since the magnifying mirror or the like is used by wearing the magnifying mirror on a body in the same manner as glasses and the like, the comfortable feeling in the use of the magnifying mirror of the like can be further enhanced.

In the embodiment described above, each optical part is arranged on condition that each of the first to third optical axes 4 to 6 is not parallel with nor perpendicular to the plane including the incident position 25, the outgoing position 55, the incident optical axis 1 and the outgoing optical axis 2. However, the present invention is not limited to this. For example, each optical part may be arranged on condition that only the optical axis (first optical axis) 4 of the lens 30 is not parallel with nor perpendicular to the plane including the incident position 25, the outgoing position 55, the incident optical axis 1 and the outgoing optical axis 2.

Further, the objective lens 10 and the ocular lens 60 are arranged on condition that the optical axes (the incident optical axis 1 and the outgoing optical axis 2) thereof are parallel with each other. However, the present invention is not limited to this. For example, (1) the objective lens 10 and the ocular lens 60 may be arranged on condition that the incident optical axis 1 and the outgoing optical axis 2 are placed on the same horizontal plane and are not parallel with each other, and each optical part may be arranged on condition that the optical axis (first optical axis) 4 of the lens 30 is not parallel with nor perpendicular to the plane including the incident optical axis 1 and the outgoing optical axis 2.

Moreover, the objective lens 10 and the ocular lens 60 are arranged on condition that the optical axes (the incident optical axis 1 and the outgoing optical axis 2) thereof are placed on the same horizontal plane orthogonal to the paper of FIG. 1. However, the present invention is not limited to this. For example, (2) the objective lens 10 and the ocular lens 60 may be arranged on condition that the incident optical axis 1 and the outgoing optical axis 2 are not placed on the same horizontal plane nor the same vertical plane, and do not agree with each other, and each optical part may be arranged on condition that the optical axis (first optical axis) 4 of the lens 30 is not parallel with nor perpendicular to the plane including the incident position 25, the outgoing position 55 and the incident optical axis 1 and/or the plane including the incident position 25, the outgoing position 55 and the outgoing optical axis 2.

Here, the "vertical plane" denotes a plane perpendicular to the optical system.

In both cases (1) and (2), this embodiment differs from the earlier technology, and the incident optical axis 1 and the outgoing optical axis 2 can be directed in the same horizontal direction or the same vertical direction without requiring any reflection system used only to direct the incident optical axis and the outgoing optical axis in the same horizontal direction or the same vertical direction. Accordingly, as compared with in the earlier technology, the whole optical system can be set further compactly and lightened in weight. Further, the whole optical system can be manufactured at low cost.

Further, each optical part in the optical system and its arrangement is not limited to the embodiment described above, but can be modified appropriately.

Furthermore, the optical system of the present invention is applied to the magnifying mirror or the like. However, the present invention is not limited to this. It is needless to say that the optical system of the present invention can be applied to various devices.

### Industrial Applicability

According to the optical system of the present invention, it requires no reflection system used only to direct the incident optical axis and the outgoing optical axis in the same horizontal direction or the same vertical direction. Accordingly, the whole optical system can be set further compactly. Further, since the number of parts can be decreased, the whole optical system can be lightened in weight, and moreover, be manufactured at low cost.

## Claims

1. An optical system, in which an incident optical axis does not agree with an outgoing optical axis, comprising:
an optical part having an optical axis, the optical axis being not parallel with and not perpendicular to a plane including an incident position of an incident light, an outgoing position of an outgoing light, and the incident optical axis or the outgoing optical axis; and having no reflecting surface.

2. The optical system as claimed in claim 1, wherein the optical axis of the optical part having no reflecting surface is not parallel with and not perpendicular to both a plane including the incident position, the outgoing position and the incident optical axis, and a plane including the incident position, the outgoing position and the outgoing optical axis.

3. The optical system as claimed in claim 1 or 2, wherein the incident optical axis and the outgoing optical axis are placed on the same plane.

4. The optical system as claimed in any one of claims 1 to 3, wherein the incident optical axis and the outgoing optical axis are parallel with each other.
